(19) Europäisches Patentamt
European Patent Office
Office européen des brevets

(11) **EP 3 557 670 B1**

(12) **FASCICULE DE BREVET EUROPEEN**

(45) Date de publication et mention
de la délivrance du brevet:
**18.11.2020 Bulletin 2020/47**

(51) Int Cl.:
*H01M 8/04992* (2016.01)    *H01M 8/04298* (2016.01)

(21) Numéro de dépôt: **19169556.8**

(22) Date de dépôt: **16.04.2019**

(54) **PROCÉDÉ DE DÉTERMINATION D'UN DIMENSIONNEMENT D'UNE CELLULE ÉLECTROCHIMIQUE À PLAQUES DE MAINTIEN DE TYPE CIRCUIT IMPRIMÉ**

VERFAHREN ZUR BESTIMMUNG DER DIMENSIONIERUNG EINER ELEKTROCHEMISCHEN ZELLE MIT HALTEPLATTEN VOM TYP LEITERPLATTE

METHOD FOR DETERMINING SIZING OF AN ELECTROCHEMICAL CELL WITH PRINTED CIRCUIT BOARD TYPE HOLDING PLATES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2018 FR 1853359**

(43) Date de publication de la demande:
**23.10.2019 Bulletin 2019/43**

(73) Titulaire: **Commissariat à l'Énergie Atomique et aux Énergies Alternatives
75015 Paris cedex (FR)**

(72) Inventeurs:
• **GERARD, Mathias
38054 GRENOBLE CEDEX 09 (FR)**
• **CARMINATI, Jean-Noel
38054 GRENOBLE CEDEX 09 (FR)**
• **GARNIER, Laurent
38054 GRENOBLE CEDEX 09 (FR)**
• **NAIFF DA FONSECA, Ramon
38054 GRENOBLE CEDEX 09 (FR)**
• **ROUILLON, Ludovic
38054 GRENOBLE CEDEX 09 (FR)**
• **VINCENT, Rémi
38054 GRENOBLE CEDEX 09 (FR)**

(74) Mandataire: **INNOV-GROUP
310, avenue Berthelot
69372 Lyon Cedex 08 (FR)**

(56) Documents cités:
**JP-A- 2004 327 105    US-A1- 2015 140 462**

EP 3 557 670 B1

**Description**

## DOMAINE TECHNIQUE

Le domaine de l'invention est celui des générateurs électrochimiques, tels que les piles à combustible et les électrolyseurs, comportant au moins une cellule électrochimique dont l'assemblage membrane électrodes est fixé, notamment par collage, à deux plaques de maintien, ces dernières pouvant être, par exemple, de type circuit imprimé. L'invention porte plus particulièrement sur un procédé de détermination d'un dimensionnement d'une cellule électrochimique et sur un procédé de fabrication d'une telle cellule électrochimique.

## ÉTAT DE LA TECHNIQUE ANTÉRIEURE

Un générateur électrochimique, tel qu'une pile à combustible ou un électrolyseur, comporte habituellement au moins une cellule électrochimique dont l'anode et la cathode sont séparées électriquement l'une de l'autre par une membrane électrolytique, la cellule étant le lieu de réactions électrochimiques entre des réactifs introduits de manière continue. L'empilement des électrodes et de la membrane électrolytique est appelé assemblage membrane électrodes (AME).

La cellule électrochimique comporte habituellement deux plaques de maintien, au contact desquelles est disposé l'assemblage membrane électrodes. Les plaques de maintien, appelées plaques bipolaires dans le cas d'un empilement de cellules électrochimiques, sont adaptées à assurer la distribution fluidique des réactifs au niveau des électrodes et la connexion électrique de ces dernières.

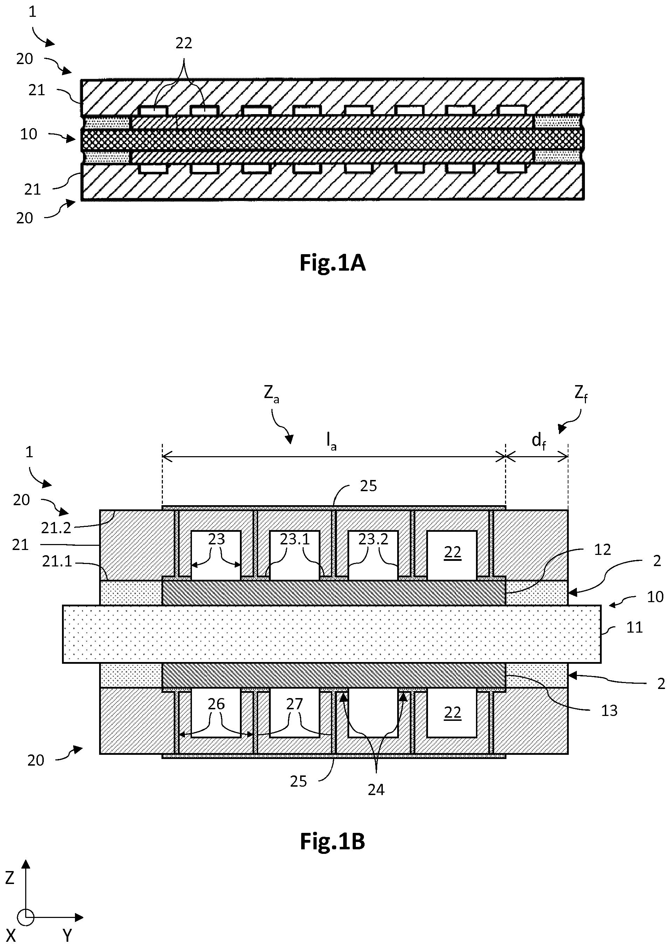

Ces plaques de maintien peuvent être réalisées à partir de la technologie des circuits imprimés (PCB, pour *Printed Circuit Board,* en anglais). Ainsi, comme l'illustre la fig.1A, le document US2004/0224190 décrit des plaques de maintien 20 de type PCB d'une cellule électrochimique 1. Chaque plaque de maintien 20 comprend un substrat isolant 21, réalisé en un matériau électriquement isolant, dont une face interne présente des structurations formant les canaux de distribution fluidique 22. Des bandes électriquement conductrices sont disposées sur la face interne, et s'étendent le long de parois longitudinales qui séparent les canaux de distribution 22 deux à deux, en étant au contact de l'assemblage membrane électrodes 10 pour permettre la polarisation électrique des électrodes.

En fonctionnement, la pression absolue dans les canaux de distribution, en particulier du côté cathodique, peut être de l'ordre de 1 bar à quelques bars dans le cas d'une pile à combustible, et de l'ordre de plusieurs dizaines de bars dans le cas d'un électrolyseur. Pour éviter d'avoir recours à des plaques terminales de compression, le document US2004/0224190 prévoit l'utilisation d'un adhésif à fibre de renfort permettant de maintenir les plaques de maintien assemblées l'une à l'autre de part et d'autre de l'assemblage membrane électrodes.

Cependant, il existe un besoin d'améliorer les caractéristiques ou les performances électrochimiques d'une telle cellule électrochimique en fonctionnement.

## EXPOSÉ DE L'INVENTION

L'invention a pour objectif de remédier au moins en partie aux inconvénients de l'art antérieur, et plus particulièrement de proposer un procédé de détermination d'un dimensionnement d'une cellule électrochimique à plaques de maintien, par exemple de type circuit imprimé, permettant de minimiser une surface totale de la cellule électrochimique tout en maximisant un signal électrique généré par la cellule électrochimique. Une cellule électrochimique réalisée sur la base d'un tel dimensionnement est alors en mesure de présenter de bonnes performances électrochimiques pour une meilleure densité massique d'énergie.

Pour cela, l'objet de l'invention est un procédé de détermination d'un dimensionnement d'une cellule électrochimique mis en œuvre par un calculateur, permettant de minimiser une surface totale de la cellule électrochimique tout en maximisant un signal électrique généré par la cellule électrochimique en fonctionnement, la cellule électrochimique comportant :

◦ un assemblage membrane électrodes formé de deux électrodes séparées l'une de l'autre par une membrane électrolytique, et deux plaques de maintien entre lesquelles est en contact l'assemblage membrane électrodes ;
◦ la surface totale de la cellule électrochimique étant définie dans un plan parallèle au plan de la membrane électrolytique par :

• une zone active de forme allongée présentant un rapport de forme défini par une longueur et une largeur, la longueur étant supérieure à la largeur, dans laquelle chaque plaque de maintien est susceptible d'être déformée suivant une direction opposée au plan de la membrane électrolytique, et par
• une zone de fixation entourant la zone active, dans laquelle chaque plaque de maintien est fixée à l'assemblage membrane électrodes.

Le procédé selon l'invention comporte au moins les étapes suivantes :

a. détermination d'une première fonction-coût exprimant l'évolution d'un premier paramètre représentatif de la surface totale, en fonction d'une variable d'ajustement représentative dudit rapport de forme de la zone active ;
b. détermination, à partir d'un modèle physique prédéterminé de la cellule électrochimique implémenté dans le calculateur, d'une deuxième fonction-coût exprimant l'évolution d'un deuxième paramètre représentatif du signal électrique généré, en fonction de la variable d'ajustement ;

c. détermination d'une fonction-coût dite composée à partir des première et deuxième fonctions-coût et identification d'une valeur de la variable d'ajustement optimisant la fonction-coût composée et donc optimisant conjointement les premières et deuxièmes fonctions-coût.

Certains aspects préférés mais non limitatifs de ce procédé sont les suivants.

Le modèle physique prédéterminé peut fournir une évolution, pour des conditions opératoires données, c'est-à-dire prédéfinies, dudit signal électrique généré en fonction d'une résistance électrique dont la valeur dépend d'une déformation locale d'une plaque de maintien dans la zone active, ladite déformation locale étant elle-même fonction de la variable d'ajustement.

Le procédé peut comporter :

◦ plusieurs mises en œuvre des étapes a à c, de sorte qu'à chaque mise en œuvre, le modèle physique fournit une évolution différente dudit signal électrique généré, lesdites évolutions dudit signal électrique généré correspondant à diverses conditions opératoires de la cellule électrochimique en fonctionnement, plusieurs valeurs optimales de la variable d'ajustement étant ainsi identifiées ;

◦ une étape d de sélection de l'une desdites valeurs optimales identifiées, en fonction d'une valeur cible prédéterminée de la surface totale et/ou d'une valeur cible prédéterminée du signal électrique généré.

Lors desdites réitérations des étapes a à c, lesdites évolutions dudit signal électrique généré peuvent correspondre à une même valeur d'un signal électrique imposé à la cellule électrochimique en fonctionnement.

De préférence, le premier paramètre, le deuxième paramètre et la variable d'ajustement sont normalisés.

De préférence, la première fonction-coût tend à être optimisée lorsque la variable d'ajustement tend vers 1, resp 0, et la deuxième fonction-coût tend à être optimisée lorsque la variable d'ajustement tend vers 0, resp 1.

De préférence, le premier paramètre est choisi pour que la première fonction-coût soit décroissante, resp. croissante, et le deuxième paramètre est choisi pour que la deuxième fonction-coût soit croissance, resp. décroissante.

De préférence, le premier paramètre est choisi de sorte que la minimisation, resp. maximisation, de la première fonction-coût tend à minimiser la surface totale, et le deuxième paramètre est choisi pour que la minimisation, resp. maximisation, de la deuxième fonction-coût tend à maximiser le signal électrique.

De préférence, la fonction-coût composée est une norme d'un vecteur formé, pour chaque valeur de la variable d'ajustement, des valeurs correspondantes du premier paramètre et du deuxième paramètre, la valeur identifiée de la variable d'ajustement correspondant à un extremum de la fonction-coût composée.

De préférence, la fonction-coût composée est une combinaison éventuellement linéaire de la première fonction-coût et de la deuxième fonction-coût, la valeur identifiée de la variable d'ajustement correspondant à un extremum de la fonction-coût composée.

L'invention porte également sur un procédé de fabrication d'une cellule électrochimique, comportant les étapes suivantes :

- détermination d'un dimensionnement d'une cellule électrochimique par le procédé selon l'une quelconque des caractéristiques précédentes ;
- fabrication de la cellule électrochimique, de sorte que le rapport de forme de la zone active est fonction de la valeur identifiée de la variable d'ajustement.

De préférence, le rapport de forme de la zone active est choisi dans une gamme de la variable d'ajustement pour laquelle la fonction-coût composée présente un écart inférieur ou égal à un pourcentage prédéterminé de l'extrémum correspondant à la valeur identifiée de la variable d'ajustement.

L'invention porte également sur un programme d'ordinateur, et sur un support d'enregistrement d'informations, comprenant des instructions pour exécuter le procédé de détermination selon l'une quelconque des caractéristiques précédentes, ces instructions étant aptes à être exécutées par un calculateur.

L'invention porte également sur un dispositif de détermination d'un dimensionnement d'une cellule électrochimique comprenant :

- un calculateur, comprenant un processeur et une mémoire, configuré pour mettre en œuvre le procédé de détermination selon l'une quelconque des caractéristiques précédentes ;
- des moyens d'entrée de données pour fournir au calculateur une valeur de surface de la zone active et une valeur de la dimension de la zone de fixation ;
- des moyens de sortie d'au moins une valeur identifiée de la variable d'ajustement.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A, déjà décrite, est une vue schématique en coupe transversale d'une cellule électrochimique à plaques de maintien de type circuit imprimé selon un exemple de l'art antérieur; la figure 1B est une vue schématique en coupe transversale d'une cellule électrochimique à plaques de maintien de type circuit imprimé selon un mode de réalisation ;

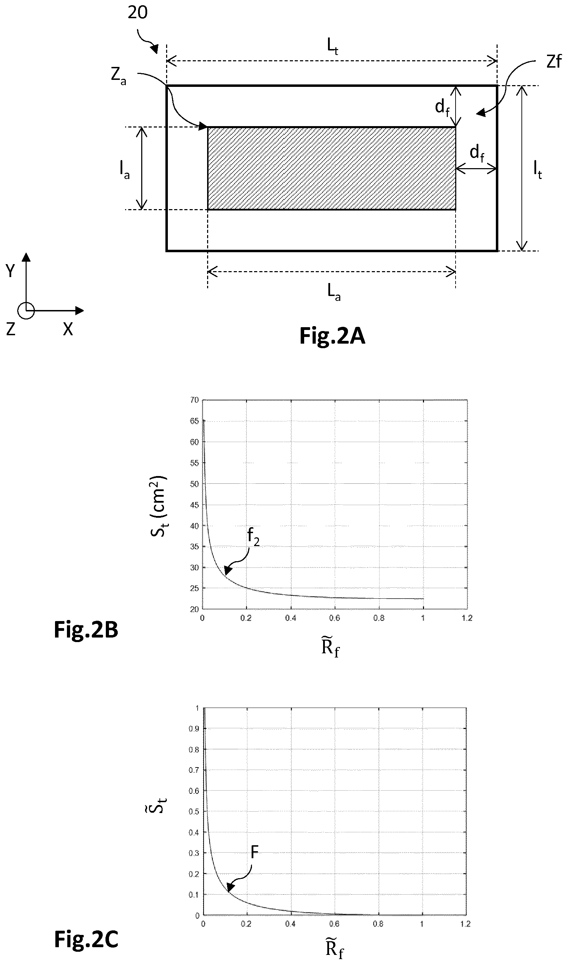

la figure 2A est une vue schématique de dessus d'une plaque de maintien illustrant la zone active Za entourée par la zone périphérique de fixation Zf ; la figure 2B est un graphe illustrant un exemple d'évolution de la surface totale $S_t$ en fonction d'une variable d'ajustement $\tilde{R}_f$ représentative du rapport de forme allongée de la zone active ; et la figure 2C est un graphe illustrant un exemple d'évolution d'un paramètre normalisé $\tilde{S}_t$ représentatif de la surface totale $S_t$ en fonction de la variable d'ajustement $\tilde{R}_f$ ;

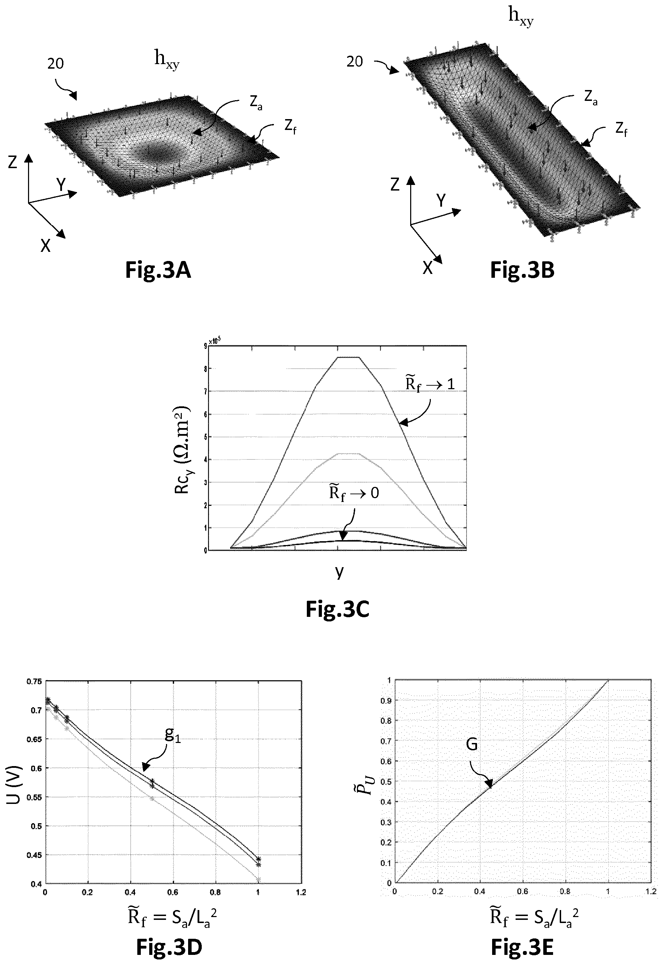

les figures 3A et 3B sont des vues en perspective de deux plaques de maintien simplifiées ayant des rapports de forme différents et subissant une déformation locale différente issue d'une même force de pression appliquée uniformément ; la figure 3C est un graphe illustrant l'évolution d'une résistance électrique de contact $Rc_y$ suivant une largeur d'une plaque de maintien, pour différents rapports de forme ; la figure 3D est un graphe illustrant un exemple d'évolution de la tension électrique U en fonction de la variable d'ajustement $\tilde{R}_f$ ; et la figure 3E est un graphe illustrant un exemple d'évolution d'un paramètre normalisé $\tilde{P}_U$ représentatif de la tension électrique U en fonction de la variable d'ajustement $\tilde{R}_f$ ;

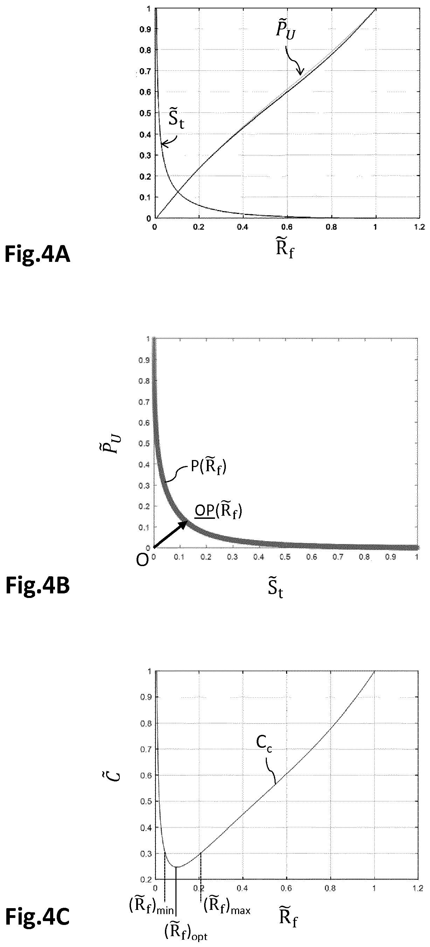

la figure 4A est un graphe illustrant un exemple d'évolution des paramètres normalisés $\tilde{S}_t$ et $\tilde{P}_U$ en fonction de la variable d'ajustement $\tilde{R}_f$ ; la figure 4B est un graphe illustrant un exemple d'évolution du paramètre normalisé $\tilde{P}_U$ en fonction du paramètre normalisé $\tilde{S}_t$ ; et la figure 4C est un graphe illustrant une fonction-coût composée $C_c$ comme combinaison linéaire des fonctions-coût F et G telles que $\tilde{S}_t = F(\tilde{R}_f)$ et $\tilde{P}_U = G(\tilde{R}_f)$.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un procédé de détermination d'un dimensionnement d'une cellule électrochimique à plaques de maintien fixées à l'assemblage membrane électrode, notamment par collage. Ce procédé de détermination est mis en œuvre par un calculateur. Les plaques de maintien peuvent être, par exemple, de type circuit imprimé (PCB, pour *Printed Circuit Board,* en anglais). Le procédé permet d'optimiser à la fois la surface totale de la cellule électrochimique ainsi que le signal électrique généré par cette même cellule électrochimique en fonctionnement, et donc la puissance électrique fournie.

On décrira différents modes de réalisation et variantes en référence à une pile à combustible, et en particulier à une pile à combustible de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques basse température, par exemple les électrolyseurs générant de l'hydrogène et de l'oxygène à partir d'eau.

La figure 1B est une vue en coupe transversale, schématique et partielle, d'une cellule électrochimique 1 selon un mode de réalisation, comportant des plaques de maintien 20 de type PCB. Cependant, d'autres technologies de plaques de maintien peuvent être utilisées, telles que, par exemple, les tôles métalliques embouties, ou les plaques en matériau composite chargé de graphite réalisées par moulage.

On définit ici et pour la suite de la description un repère direct tridimensionnel orthogonal (X,Y,Z), où les axes X et Y forment un plan parallèle au plan principal de la cellule électrochimique 1, et où l'axe Z est orienté suivant l'épaisseur de la cellule.

La cellule électrochimique 1 comporte un assemblage membrane électrodes 10 formé d'une anode 12 et d'une cathode 13 séparées l'une de l'autre par une membrane électrolytique 11. L'assemblage membrane électrodes 10 est disposé entre des plaques de maintien 20 adaptées à amener des espèces réactives aux électrodes 12, 13 et à assurer la connexion électrique de celles-ci. Elles sont également adaptées à évacuer la chaleur produite lors de la réaction électrochimique.

Chaque électrode 12, 13 comporte une couche de diffusion (GDL, pour *Gas Diffusion Layer,* en anglais) et une couche active située entre la membrane électrolytique 11 et la couche de diffusion. Les couches actives sont le lieu des réactions électrochimiques. Elles comportent des matériaux permettant les réactions d'oxydation et de réduction aux interfaces respectives de l'anode 12 et la cathode 13 avec la membrane électrolytique 11. Les couches de diffusion sont réalisées en un matériau poreux autorisant la diffusion des espèces réactives entre les circuits de distribution 22 des plaques de maintien 20 et les couches actives, ainsi que la diffusion des produits issus de la réaction électrochimique.

La membrane électrolytique 11 est ici une membrane échangeuse de protons. Elle permet la diffusion de protons d'une anode 12 jusqu'à une cathode 13, l'anode 12 et la cathode 13 étant en regard l'une de l'autre, les protons pouvant se présenter au sein de la membrane sous la forme d'ions $H_3O^+$. Elle assure également l'isolation électrique entre l'anode 12 et la cathode 13.

Chaque plaque de maintien 20 est du type circuit imprimé (PCB), c'est-à-dire qu'elle comporte un substrat isolant 21 réalisé en un matériau électriquement isolant, sur et dans laquelle s'étendent des éléments de connexion électrique. Elle présente une face interne 21.1 comportant des canaux de distribution fluidique 22 séparés deux à deux par des parois longitudinales 23, celles-ci étant au contact de l'une desdites électrodes et étant adaptées à lui appliquer un potentiel électrique.

Le substrat isolant 21 est un substrat rigide, éventuellement flexible, réalisé en un matériau électriquement isolant. Il présente une face interne 21.1 et une face externe 21.2 opposées l'une à l'autre. La face interne 21.1 est orientée vers l'assemblage membrane électrodes 10 et est en contact électrique avec l'une des électrodes 12, 13. Le substrat isolant 21 présente une épaisseur maximale qui peut être de l'ordre de quelques millimètres, par exemple comprise entre 1mm et 6mm, de préférence égale à 2mm. Le matériau isolant est en outre inactif vis-à-vis d'un milieu aqueux, c'est-à-dire inactif vis-à-vis de l'humidité. Il peut ainsi s'agir d'un matériau PF4, c'est-à-dire d'une résine époxy renforcée à fibres de verre.

Des circuits de distribution fluidique sont formés par structuration des plaques de maintien 20 au niveau de leurs faces internes 21.1. Cette structuration de la face interne 21.1 définit des canaux de distribution fluidique 22, adaptés à amener et évacuer des fluides vers et à partir des électrodes. Ces canaux de distribution 22 présentent une forme d'échancrures pratiquées dans le substrat isolant 21 à partir de la face interne 21.1. Les canaux de distribution 22 sont séparés deux à deux par une paroi longitudinale 23. Les parois longitudinales 23 sont délimitées par des faces latérales 23.2 opposées l'une à l'autre et par une face d'extrémité 23.1. Les parois longitudinales 23 sont au contact de l'assemblage membrane électrodes 10 au niveau des faces d'extrémité 23.1.

Des portions conductrices de contact 24 sont disposées au niveau des faces d'extrémité 23.1 des parois longitudinales 23. Ces portions conductrices de contact 24 sont réalisées en un matériau électriquement conducteur, et sont adaptées à assurer la connexion électrique de l'électrode avec un circuit électrique externe. Les portions conductrices de contact 24 sont ainsi en contact électrique avec l'électrode correspondante. Dans cet exemple, les faces d'extrémité 23.1 sont au moins partiellement revêtues par les portions conductrices de contact 24, et les faces latérales 23.2 qui délimitent transversalement les canaux de distribution 22 ne sont sensiblement pas revêtues par les portions conductrices de contact 24. Les portions conductrices de contact 24 s'étendent sur la face d'extrémité 23.1 d'une même paroi longitudinale 23 peuvent être jointes les unes aux autres et former une bande continue conductrice, ou être disjointes les unes des autres et former des plots conducteurs distincts. Les portions conductrices de contact 24 peuvent présenter une épaisseur de l'ordre de quelques dizaines à quelques centaines de microns, par exemple comprise entre $10\mu m$ et $500\mu m$, de préférence égale à $70\mu m$. Elles peuvent être réalisées en un matériau choisi parmi le cuivre, l'or, l'or nickel, le chrome, le tungstène de titane, ou tout autre matériau électriquement conducteur adapté.

Au moins une piste conductrice de polarisation 25 s'étend sur la face externe 21.2 du substrat isolant 21. Elle est reliée électriquement aux portions conductrices de contact 24, et assure la connexion de ceux-ci au circuit électrique externe du générateur électrochimique. La piste conductrice de polarisation 25 peut présenter une épaisseur de l'ordre de quelques dizaines à quelques centaines de microns, par exemple comprise entre $10\mu m$ et $500\mu m$, de préférence égale à $70\mu m$. Elles peuvent être réalisées en un matériau choisi parmi le cuivre, l'or, l'or nickel, le chrome, le tungstène de titane, ou tout autre matériau électriquement conducteur adapté.

Le substrat isolant 21 comporte des orifices traversants 26 qui s'étendent de la face externe 21.2 jusqu'à la face interne 21.1, et plus précisément jusqu'aux faces d'extrémité 23.1 des parois longitudinales 23, suivant l'axe Z. Les orifices traversants 26 s'étendent ainsi dans les parois longitudinales 23 et débouchent sur les faces d'extrémité 23.1. Ils comportent des connecteurs électriques 27, sous la forme d'un matériau électriquement conducteur, qui relient la piste conductrice de polarisation 25 aux portions conductrices de contact 24. Les orifices traversants 26 associés aux connecteurs électriques 27 forment ainsi des vias conducteurs. Les orifices traversants 26 peuvent présenter un diamètre de l'ordre de quelques dizaines à quelques centaines de microns, par exemple compris entre $50\mu m$ et $500\mu m$. Ils présentent de préférence une forme de trous plutôt qu'une forme de tranchées, dans le sens où les dimensions transversales dans le plan XY sont du même ordre de grandeur. Les connecteurs électriques 27 peuvent présenter une épaisseur, dans le plan XY, de l'ordre de quelques dizaines à quelques centaines de microns, par exemple comprise entre $10\mu m$ et $100\mu m$, et de préférence égale à $70\mu m$. Ils peuvent être réalisés en un matériau choisi parmi le cuivre, l'or, l'or nickel, le chrome, le tungstène de titane, ou tout autre matériau électriquement conducteur adapté. Les orifices traversants 26 sont de préférence obturés de manière étanche, notamment par les connecteurs électriques 27.

Le générateur électrochimique comporte un circuit électrique externe (non représenté) qui relie électriquement les pistes conductrices de polarisation 25 à une charge électrique lorsque le générateur est une pile à combustible, ou à une source de tension lorsque le générateur est un électrolyseur. La charge électrique est adaptée à imposer une valeur de courant électrique à la cellule électrochimique 1, qui en réponse applique une tension électrique U aux bornes de la charge électrique.

La tension générée par la cellule électrochimique 1 peut être de l'ordre de 0,7V. Dans le cas d'un électrolyseur, la source de tension est connectée électriquement aux électrodes de la cellule électrochimique 1, et est adaptée à appliquer une différence de potentiel électrique continue entre l'anode 12 et la cathode 13. La tension électrique appliquée est positive, dans le sens où le potentiel électrique imposé à l'anode 12 est supérieur à celui imposé à la cathode 13. Elle peut être comprise entre 1,3V et 3V, par exemple égale à 1,8V environ, pour une densité de courant comprise entre 50mA/cm$^2$ et 4A/cm$^2$ environ. L'application de la tension électrique permet ainsi d'assurer l'oxydation de l'eau à l'anode 12, la circulation des électrons dans le circuit électrique jusqu'à la cathode 13, et la réduction des protons à la cathode 13.

Ainsi, les portions conductrices de contact 24 sont directement connectées à la piste conductrice de polarisation 25 par les vias conducteurs 27 situés dans les parois longitudinales 23, et non pas par des vias conducteurs déportés et situés hors de la zone active Za de l'assemblage membrane électrodes 10. Ce positionnement des vias conducteurs 27 dans les parois longitudinales 23 permet d'assurer une meilleure homogénéité spatiale des propriétés électriques de la plaque de maintien 20, dans le sens où chaque portion conductrice de contact 24 est reliée de la même manière à la piste conductrice de polarisation 25. La résistance électrique d'accès aux portions conductrices de contact 24 est ainsi sensiblement homogène.

De plus, il est possible de réaliser les portions conductrices de contact 24 sous la forme de plots distincts les uns des autres, chaque plot 24 étant relié à une piste conductrice de polarisation 25 par un via conducteur 27. Ainsi, les portions conductrices de contact 24 d'une même paroi longitudinale 23 ne forment plus une bande continue, mais des plots disjoints les uns des autres. Cela permet d'assurer un meilleur contact mécanique, ainsi qu'une meilleure pénétration des plots conducteurs de contact 24 avec l'électrode correspondante, diminuant ainsi la résistance électrique de contact Rc. Les performances électriques de la cellule électrochimique 1 sont alors améliorées.

La cellule électrochimique 1 présente une surface totale $S_t$ dans un plan XY parallèle au plan de la membrane électrolytique 11. Cette surface totale St est définie par une zone dite active Za et par une zone dite de fixation Zf.

La zone active Za s'étend dans un plan XY parallèle au plan de la membrane électrolytique 11, dans laquelle est situé l'assemblage membrane électrodes 10, et plus précisément dans laquelle sont situées les électrodes 12, 13 de l'AME. Il s'agit ainsi de la zone dans laquelle ont lieu les réactions électrochimiques.

Elle présente une forme allongée dans le plan XY et une surface $S_a$ de longueur $L_a$ et de largeur $l_a$. Par forme allongée, on entend une forme définie par la dimension longitudinale (longueur) $L_a$ et une dimension transversale (largeur) $l_a$, la longueur $L_a$ étant supérieure à la largeur $l_a$. La forme allongée peut être rectangulaire, oblongue, ovale, ou autre. De préférence, la forme allongée est rectangulaire, comme illustré sur la fig.2A, c'est-à-dire qu'elle forme un quadrilatère dont les côtés sont parallèles deux à deux, les angles pouvant être droits ou arrondis. La forme allongée est caractérisée par un paramètre adimensionnel $\tilde{R}_f$ représentatif du rapport de forme de la zone active Za, ici égal à $S_a/L_a^2$. D'autres paramètres adimensionnels équivalents peuvent être utilisés, par exemple $L_a/l_a$. La forme de la zone active Za peut ici tendre vers une forme carrée ($L_a \sim l_a$) ou être très allongée ($L_a \gg l_a$).

La surface $S_a$ peut être prédéterminée de sorte que la cellule électrochimique 1 fournisse une puissance électrique souhaitée, celle-ci étant à optimiser, pour une densité de courant électrique imposée à la cellule lorsqu'elle fonctionne en régime de courant imposé, et pour une tension électrique à optimiser.

Dans la zone active Za, les plaques de maintien 20 sont au contact des électrodes 12, 13 sans être fixées à ces dernières. Aussi, en fonctionnement, une pression est appliquée dans les canaux de distribution 22. A titre d'exemple, la pression peut être de l'ordre de 1 bar du côté anodique et de quelques dizaines de bars du côté cathodique dans le cas d'un électrolyseur, ou de un à plusieurs bars dans le cas d'une pile à combustible. Aussi, les plaques de maintien 20 sont susceptibles de subir une déformation suivant une direction Z orthogonale et opposée à l'AME 10 pouvant se traduire par une modification locale de la résistance électrique de contact Rc. La résistance électrique de contact Rc est l'une des contributions à la résistance électrique $R_{cell}$ de la cellule électrochimique. Cette dernière dépend notamment de la somme des résistances électriques des différents éléments de la cellule (connecteurs électriques $R_{ce}$, membrane $R_m$, électrodes $R_{GDL}$) ainsi que de la résistance de contact Rc entre chaque plaque de maintien 20 et l'électrode 12, 13 avec laquelle elle est en contact. La résistance de contact Rc dépend notamment de la qualité du contact mécanique entre la plaque de maintien 20 et l'assemblage membrane électrodes 10. Ainsi, en fonction de la pression du fluide circulant dans les canaux de distribution 22, la résistance de contact Rc associée à l'interface entre une plaque de maintien 20 et une électrode 12, 13 peut présenter une variation de sa valeur locale.

La surface totale $S_t$ de la cellule électrochimique 1 est définie en outre par une zone périphérique de fixation Zf dans laquelle est situé un matériau adhésif 2 disposé entre les plaques de maintien 20, permettant d'assurer la fixation des plaques de maintien 20 l'une à l'autre. Ainsi, il n'est pas nécessaire d'avoir recours à des plaques terminales assurant une force de serrage des plaques de maintien 20 l'une vers l'autre. La cellule électrochimique 1 présente alors une compacité améliorée et donc une meilleure densité massique et volumique d'énergie.

La zone périphérique de fixation Zf s'étend longitudinalement autour de l'assemblage membrane électrodes 10, dans un plan XY parallèle au plan de la membrane électrolytique 11. Plus précisément, dans cet exemple, pour chaque plaque de maintien 20, une bande de matériau adhésif 2 s'étend longitudinalement dans la zone de fixation Zf en étant au contact du substrat isolant 21 et de la membrane électrolytique 11. La dimension transversale (largeur) $d_f$ de la zone de fixation Zf dans le plan XY, correspondant ici la largeur de la bande de matériau adhésif 2, est prédéterminée et dépend de la tenue mécanique souhaitée de la cellule électrochimique (qui dépend notamment des propriétés du matériau adhésif utilisé). La largeur $d_f$ est définie comme étant la distance entre une bordure de l'assemblage membrane électrodes 10, et plus précisément une bordure d'une électrode 12, 13, et une bordure de la plaque de maintien 20, suivant l'axe X de la longueur $L_a$ ou suivant l'axe Y de la largeur $l_a$.

Ainsi, de par le matériau adhésif 2, les plaques de maintien 20 sont fixées l'une à l'autre dans la zone de fixation Zf et ne sont donc pas susceptibles de se déformer suivant l'axe Z lors du fonctionnement de la cellule électrochimique, notamment du fait de la pression des fluides circulant dans les canaux de distribution 22.

La figure 2A est une vue schématique de dessus d'une plaque de maintien 20. La zone active Za est représentée en traits hachurés, et présente une forme allongée ($L_a>l_a$), ici rectangulaire. Comme mentionné précédemment, elle est continûment bordée par la zone de fixation Zf qui présente une largeur df constante suivant l'étendue longitudinale de la zone de fixation Zf. Aussi, la surface totale St de la cellule électrochimique 1 est formée de la somme de la surface $S_a$ de la zone active Za et de la surface Sf de la zone de fixation Zf. Elle présente ici une forme rectangulaire de longueur $L_t$ et de largeur $l_t$.

Or, il existe un besoin de limiter la masse d'une cellule électrochimique 1 à performances électrochimiques données, pour ainsi améliorer sa densité massique de puissance. Pour cela, une approche consiste ici à minimiser la surface totale St de la cellule électrochimique 1 pour une surface active $S_a$ prédéterminée correspondant à un courant électrique I imposé à la cellule électrochimique 1, et pour une dimension df de fixation prédéterminée permettant d'assurer la tenue mécanique souhaitée.

On cherche ainsi à déterminer une première fonction-coût F exprimant l'évolution d'un paramètre $\tilde{S}_t$ représentatif de la surface totale St de la cellule électrochimique, en fonction d'une variable d'ajustement $\tilde{R}_f$, ici égale à $S_a/L_a^2$, représentative du rapport de forme allongée de la zone active Za. Ainsi, un premier critère consiste à optimiser la fonction-coût F associée à la masse de la cellule électrochimique, c'est-à-dire à minimiser la surface totale St, tout en tenant compte d'un deuxième critère, décrit plus loin, associé aux performances de la cellule électrochimique.

Pour cela, on exprime tout d'abord la surface totale $S_t$ en fonction de la longueur $L_a$ de la zone active Za par la relation suivante, ici dans le cas particulier d'une zone active de forme rectangulaire :

$$S_t = f_1(L_a) = (L_a + 2l_c)(\frac{S_a}{L_a} + 2l_c)$$

où le paramètre $S_t$ est à minimiser, la longueur $L_a$ étant une variable d'ajustement, la surface $S_a$ de la zone active Za et la largeur $d_f$ de la zone de fixation Zf étant prédéterminées.

Comme l'illustre la figure 2B, on procède ensuite à un changement de variable pour que la variable d'ajustement soit la variable normalisée $\tilde{R}_f$, c'est-à-dire une variable adimensionnelle variant entre 0 et 1 (bornes exclues), et représentative du rapport de forme allongée de la zone active Za. Ainsi, on note $f_2$ la fonction exprimant la relation entre la surface totale $S_t$ et la variable d'ajustement normalisée $\tilde{R}_f$ :

$$S_t = f_2(\tilde{R}_f)$$

pour laquelle la surface totale St tend vers une valeur minimale $(S_t)_{min}$ lorsque $\tilde{R}_f$ tend vers 1, c'est-à-dire pour une forme sensiblement carrée de la zone active Za, et tend vers l'infini lorsque $\tilde{R}_f$ tend vers 0, c'est-à-dire pour une forme très allongée de la zone active Za. Dans cet exemple, pour une surface active $S_a$ de 14cm$^2$ et une largeur de fixation $d_f$ de 0,5cm, la valeur minimale $(S_t)_{min}$ est égale à 22,5cm$^2$ pour une forme sensiblement carrée de 3,75cm de côté ($\tilde{R}_f \to 1$).

Comme l'illustre la figure 2C, on normalise ensuite la surface totale $S_t$ pour obtenir un paramètre normalisé $\tilde{S}_t$, c'est-à-dire adimensionné et variant entre 0 et 1, représentatif de la surface totale $S_t$ de la cellule électrochimique. La relation s'écrit ainsi :

$$\tilde{S}_t = F(\tilde{R}_f)$$

où le paramètre $\tilde{S}_t$ tend vers 0 lorsque $\tilde{R}_f$ tend vers 1 (ce qui correspond à la valeur minimale $(S_t)_{min}$ d'une forme sensiblement carrée), et où le paramètre $\tilde{S}_t$ tend vers 1 lorsque $\tilde{R}_f$ tend vers 0 (forme très allongée).

Ainsi, on obtient une première fonction-coût F exprimant l'évolution d'un paramètre normalisé $\tilde{S}_t$ représentatif de la surface totale $S_t$ en fonction de la variable d'ajustement normalisée $\tilde{R}_f$ représentative du rapport de forme allongée de la zone active Za. Cette fonction ne comporte donc qu'une variable d'ajustement, à savoir $\tilde{R}_f$, adimensionnée et variant entre 0 et 1, et comporte deux paramètres prédéterminés, à savoir la surface $S_a$ de la zone active Za et la largeur $d_f$ de la zone de fixation Zf.

Cette fonction-coût F est une fonction monotone décroissante qui exprime le fait qu'une forme sensiblement carrée ($\tilde{R}_f \to 1$) tend à minimiser la surface totale St, et donc à limiter la masse totale de la cellule électrochimique pour une performance électrochimique donnée (la surface $S_a$ de la zone active Za étant prédéterminée), tout en tenant compte des contraintes mécaniques liées à la fixation des plaques de maintien l'une à l'autre (la largeur $d_f$ de la zone de fixation Zf étant prédéterminée). Le paramètre normalisé $\tilde{S}_t$ est ici choisi de sorte que l'optimisation de la fonction-coût F est une minimisation de cette dernière. De manière équivalente, il peut avoir été choisi de sorte que l'optimisation de la fonction-coût F est une maximisation de celle-ci.

Les figures 3A et 3B illustrent deux exemples d'une plaque de maintien 20 simplifiée présentant une distribution spatiale d'une flèche $h_{xy}$ suivant l'axe Z orientée selon une direction opposée à l'assemblage membrane électrodes 10, pour différentes valeurs de la va-riable d'ajustement normalisée $\tilde{R}_f$. La flèche locale $h_{xy}$ est définie comme la différence locale de la position d'un point de la face interne 21.1 de la plaque de maintien 20 en déformation, par rapport à sa position au repos (c'est-à-dire à déformation nulle).

La distribution spatiale de la flèche $h_{xy}$ de la plaque de maintien 20 en déformation est obtenue par simulation du comportement mécanique de la plaque de maintien par un logiciel de simulation en éléments finis, ici par le logiciel *SolidWorks Simulation*. La plaque de maintien 20 est ici un substrat simplifié se présentant sous la forme d'une plaque ne comportant pas de canaux de distribution. Une zone périphérique de la plaque de maintien est maintenue fixe et correspond à la zone de fixation Zf. Une zone centrale délimitée par cette zone périphérique, correspondant à la zone active Za, est libre d'être déformée suivant l'axe Z du fait de l'application d'une force de pression de 1 bar uniforme. La plaque de maintien 20 présente une épaisseur de 1,6mm et est réalisée en un matériau équivalent au matériau FR4 (résine époxy renforcée de fibres de verre) par son module d'Young égal à 24 kN/mm$^2$ et son module de Poisson égal à 0,136.

Comme l'illustrent les fig.3A et 3B, l'application d'une pression d'une valeur uniforme de 1 bar sur la plaque de maintien 20 provoque une déformation locale de celle-ci dans la zone active Za, dont la valeur maximale $(h_{xy})_{max}$ de la flèche locale $h_{xy}$ dépend du rapport de forme allongée de la zone active Za. Ainsi, la fig.3A montre qu'une plaque de maintien 20 de forme sensiblement carrée ($\tilde{R}_f \rightarrow 1$) subissant une force de pression de 1 bar présente une flèche maximale $(h_{xy})_{max}$ de 30$\mu$m, soit ici 1,87% environ de son épaisseur. De plus, la fig.3B montre que pour la même force de pression, une plaque de maintien 20 de forme allongée à $R_f=0,5$ ($L_a=2.1_a$) pré-sente une flèche maximale $(h_{xy})_{max}$ de 5$\mu$m, soit ici 0,31% environ de son épaisseur. Enfin, pour la même force de pression, une plaque de maintien de forme très allongée à $\tilde{R}_f=0,07$ ($L_a=14.1_a$) présente une flèche maxi-male $(h_{xy})_{max}$ de 0,3$\mu$m, soit ici 0,02% environ de son épaisseur.

Il en ressort que la pression du fluide circulant dans les canaux de distribution peut se traduire par une déformation locale de la plaque de maintien 20 suivant une direction Z opposée à l'assemblage membrane électrodes 10, dont la valeur maximale $(h_{xy})_{max}$ de la flèche locale $h_{xy}$ dépend directement du rapport de forme de la zone active Za. Ainsi, la flèche maximale $(h_{xy})_{max}$ de la zone active Za peut présenter un rapport 100 entre sa valeur lorsque la forme est sensiblement carrée ($\tilde{R}_f \rightarrow 1$) et sa valeur lorsque la forme est très allongée ($\tilde{R}_f=0,07$). Or, comme mentionné précédemment, la qualité du contact mécanique entre la plaque de maintien 20 et l'électrode 12, 13 influe directement sur la valeur de la résistance électrique de contact Rc. Un mauvais contact mécanique lié à une flèche $(h_{xy})_{max}$ importante se traduit par une augmentation locale de la résistance électrique de contact Rc et donc par une dégradation des performances de la cellule électrochimique, notamment par une diminution de la tension électrique U générée par la cellule électrochimique 1 pour une valeur imposée du courant électrique I.

Il existe donc un besoin d'optimiser les performances électrochimiques de la cellule électrochimique 1, et ainsi de maximiser un signal électrique généré par la cellule électrochimique en fonctionnement, ici la tension U, pour une surface $S_a$ prédéterminée de la zone active Za.

On cherche ainsi à déterminer une deuxième fonction-coût G exprimant l'évolution d'un paramètre $\tilde{P}_U$ représentatif du signal électrique, ici la tension U, généré par la cellule électrochimique 1 en fonctionnement, en fonction de la variable d'ajustement normalisée $\tilde{R}_f$, ici égale à $S_a/L_a^2$, représentative du rapport de forme allongée de la zone active Za. Comme mentionné précédemment, un deuxième critère consiste à optimiser la fonction-coût G associée aux performances électrochimiques de la cellule électrochimique, c'est-à-dire à maximiser la tension électrique U, tout en tenant compte du premier critère, décrit précédemment, associé à la minimisation de la masse de la cellule électrochimique.

Comme l'illustre la figure 3C, on peut tout d'abord déterminer la distribution spatiale $Rc_{xy}$ de la résistance électrique de contact Rc à partir de la distribution spatiale de la flèche $h_{xy}$ déterminée précédemment (fig.3A et 3B par ex). La fig.3C illustre ainsi la distribution transversale $Rc_y$ de la résistance électrique de contact Rc suivant l'axe Y de la largeur $l_a$, suivant un plan de coupe positionné à $X=L_a/2$, pour différentes valeurs du rapport de forme de la zone active Za, et donc de la va-riable d'ajustement normalisée $\tilde{R}_f$.

On peut ainsi en déduire la valeur locale maxi-male $(Rc_{xy})_{max}$ de la résistance électrique de contact. A titre l'exemple, pour une cellule électrochimique pour laquelle la plaque de maintien 20 ne subit pas de déformation liée à la pression du fluide circulant dans les canaux de distribution, et donc pour $\tilde{R}_f$ qui tend vers 0 (forme très allongée), la résistance électrique de contact Rc peut présenter une valeur uniforme de référence $(Rc)_{ref}$ égale à $8,7.10^{-7} \ \Omega.m^2$ (ici pour $\tilde{R}_f=0,07$). La résistance électrique de contact Rc présente une valeur locale maximale $(Rc_{xy})_{max}$ qui augmente à mesure que le rapport de forme tend vers le carré, c'est-à-dire à mesure que $\tilde{R}_f$ qui tend vers 1. Lorsque $\tilde{R}_f$ tend vers 1 (forme sensiblement carrée), Rc présente une valeur locale maximale égale à $8,7.10^{-5}$ $\Omega.m^2$ (ici pour $\tilde{R}_f \sim 1$), c'est-à-dire 100 fois plus que la valeur de référence $(Rc)_{ref}$.

Comme l'illustre la figure 3D, sur la base de la distribution spatiale $Rc_{xy}$ de la résistance électrique de contact Rc déterminée précédemment pour différentes valeurs de la variable d'ajustement normalisée $\tilde{R}_f$, on exprime ensuite la valeur de la tension électrique U générée par la cellule électrochimique pour chaque distribution spatiale $Rc_{xy}$ de la résistance électrique de contact Rc, et donc pour chaque valeur de variable d'ajustement normalisée $\tilde{R}_f$. Pour cela, on utilise un modèle physique de la réponse électrochimique de la cellule électrique, ici de la tension électrique U, pour des propriétés physicochimiques et des conditions opératoires prédéterminées d'une cellule électrochimique. Ce modèle peut être un modèle dynamique de Robin et al 2015 décrit dans la publication intitulée Development and experimental validation of a PEM fuel cell 2D-model to study heterogeneities effects along large-area cell surface, Int. J. Hydrogen Energy, 40 (2015) 10211-10230. D'autres modèles physiques peuvent être utilisés. On a ainsi une relation :

$$U = g_1(\tilde{R}_f)$$

où la fonction $g_1$ est une fonction continue issue par exemple d'une interpolation réalisée à partir des valeurs obtenues de la tension électrique U en fonction de la variable d'ajustement normalisée $\tilde{R}_f$. Différentes valeurs de la tension U sont ici représentées, pour différentes performances électrochimiques de la cellule électrochimique (différentes courbes de polarisation U/I de la cellule électrochimique).

On normalise ensuite la tension électrique U pour obtenir un paramètre normalisé $\tilde{U}$, donc adimensionné et variant entre 0 et 1, représentatif de la tension électrique U générée par la cellule électrochimique en fonctionnement.

Comme l'illustre la figure 3E, de préférence, on effectue également un changement de variable pour passer du paramètre normalisé $\tilde{U}$ à un nouveau paramètre $\tilde{P}_U = 1 - \tilde{U}$. Ainsi, la relation s'écrit :

$$\tilde{P}_U = G(\tilde{R}_f)$$

où le paramètre $\tilde{P}_U$ est sensiblement égal à 0 lorsque $\tilde{R}_f \to 0$, ce qui correspond à la valeur maximale de la tension électrique U (forme très allongée, donc faible $(h_{xy})_{max}$ et faible $(Rc_{xy})_{max}$), et où le paramètre $\tilde{P}_U$ est sensiblement égal à 1 lorsque $\tilde{R}_f \to 1$, ce qui correspond à la valeur minimale de la tension électrique U (forme sensiblement carrée, donc $(h_{xy})_{max}$ élevée et $(Rc_{xy})_{max}$ élevée).

Ainsi, on obtient une deuxième fonction-coût G exprimant l'évolution d'un paramètre normalisé $\tilde{P}_U$ représentatif de la tension électrique U produite par la cellule électrochimique en fonction de la variable d'ajustement normalisée $\tilde{R}_f$ représentative du rapport de forme allongée de la zone active Za. Cette fonction ne comporte donc qu'une variable d'ajustement, à savoir $\tilde{R}_f$, adimensionnée et variant entre 0 et 1 (bornes exclues), et comporte deux paramètres prédéterminés, à savoir la surface $S_a$ de la zone active Za et la largeur $d_f$ de la zone de fixation Zf. Elle dépend également des propriétés physicochimiques et des conditions opératoires déterminées dans le modèle physique utilisé.

Cette fonction-coût G est ici une fonction monotone croissante, qui exprime le fait qu'une forme très allongée ($\tilde{R}_f \to 0$) tend à maximiser la tension électrique U, et donc à maximiser les performances électrochimiques de la cellule électrochimique. Le paramètre normalisé $\tilde{P}_U$ est ici choisi de sorte que l'optimisation de la fonction-coût G est une minimisation de cette dernière. De manière équivalente, il peut avoir été choisi de sorte que l'optimisation de la fonction-coût G est une maximisation de celle-ci.

On cherche ensuite à optimiser une fonction-coût composée formée à partir de la première fonction-coût F et de la deuxième fonction-coût G. L'identification d'une valeur $(\tilde{R}_f)_{opt}$ de la variable d'ajustement $\tilde{R}_f$ optimisant la fonction-coût composée permet alors d'optimiser conjointement les première et deuxième fonctions-coût F et G, et ainsi de minimiser la surface totale $S_t$ de la cellule électrochimique tout en maximisant le signal électrique, ici la tension U, généré par la cellule électrochimique 1.

Comme l'illustre la figure 4A, dans la mesure où le paramètre $\tilde{S}_t$ et le paramètre $\tilde{P}_U$ sont normalisés et dépendent tous deux de la même variable d'ajustement normalisée $\tilde{R}_f$, il est possible de tracer les deux fonctions-coût F et G sur le même graphe. La fonction-coût F est décroissante et tend à être optimisée lorsque la variable d'ajustement $\tilde{R}_f$ tend vers 1, minimisant ainsi la surface totale $S_t$. La fonction-coût G est croissante et tend à être optimisée lorsque la variable d'ajustement $\tilde{R}_f$ tend vers 0, maximisant ainsi la tension électrique U. Selon l'approche d'optimisation multicritères, la valeur $(\tilde{R}_f)_{opt}$ de la variable d'ajustement $\tilde{R}_f$ optimisant la fonction-coût composée, et donc optimisant à la fois la fonction-coût F et la fonction-coût G, est comprise entre $\tilde{R}_f \sim 0$ et $\tilde{R}_f \sim 1$, ces valeurs étant exclues. Le fait que les fonctions-coût F et G soient l'une croissante et l'autre décroissante permet de déterminer aisément une fonction-coût composée qui s'agira d'optimiser, c'est-à-dire de minimiser ou de maximiser.

Comme l'illustre la figure 4B, selon une première variante, on exprime le deuxième paramètre $\tilde{P}_U = G(\tilde{R}_f)$ en fonction du premier paramètre $\tilde{S}_t = F(\tilde{R}_f)$. Autrement dit, on trace un front de Pareto dans l'espace des solutions des fonctions-coût F et G. Chaque point $P(\tilde{R}_f)$ du

graphe dépend de la valeur de la variable d'ajustement $\tilde{R}_f$, et ses coordonnées sont les valeurs correspondantes du paramètre $\tilde{P}_U$ et du paramètre $\tilde{S}_t$. On calcule ensuite une norme $d_{Rf}$ pour chaque vecteur $OP(\tilde{R}_f)$ où O est le point de référence du repère $(O, \tilde{S}_t, \tilde{P}_U)$. La norme $d_{Rf}$ peut ainsi être la distance euclidienne entre le point P considéré et le point O. On obtient ainsi une fonction-coût composée $C_v$ exprimant l'évolution de la norme $d_{Rf}$ en fonction de la variable d'ajustement $\tilde{R}_f$, exprimée ainsi :

$$d_{Rf} = C_V(\tilde{R}_f).$$

L'optimisation de la fonction-coût composée $C_v$ revient ici à identifier la valeur $(\tilde{R}_f)_{opt}$ de la variable d'ajustement $\tilde{R}_f$ pour laquelle la norme $d_{Rf}$ est minimale. Autrement dit : $d_{Rf}((\tilde{R}_f)_{opt}) = min(d_{Rf})$. A la valeur $(\tilde{R}_f)_{opt}$, on optimise alors conjointement la fonction-coût F et la fonction-coût G, c'est-à-dire que l'on minimise la surface totale St tout en maximisant le signal électrique U généré par la cellule électrochimique.

Comme l'illustre la figure 4C, selon une deuxième variante, on détermine une fonction-coût composée $C_c$ comme une combinaison, par exemple linéaire, des fonctions-coût F et G. Autrement dit :

$$\tilde{C}(\tilde{R}_f) = C_c(\tilde{R}_f) = \alpha.F(\tilde{R}_f) + \beta.G(\tilde{R}_f).$$

où le paramètre $\tilde{C}$ est un paramètre normalisé, et où les coefficients $\alpha$ et $\beta$ sont des coefficients de pondération, ici égaux à 1, qui peuvent être adaptés en fonction du poids attribué à tel critère vis-à-vis de l'autre critère.

On obtient ainsi une courbe qui tend vers 1 lorsque $\tilde{R}_f \to O$, ce qui correspond à une forme très allongée optimisant ainsi la fonction-coût G et donc maximisant la tension électrique U. La fonction-coût composée $C_c$ passe ensuite par un extremum à la valeur $(\tilde{R}_f)_{opt}$, puis tend vers 1 lorsque $\tilde{R}_f \to 1$, ce qui correspond à une forme sensiblement carrée optimisant ainsi la fonction-coût F et donc minimisant la surface totale $S_t$. L'optimisation de la fonction-coût composée $C_c$ consiste donc à identifier la valeur $(\tilde{R}_f)_{opt}$ de la variable d'ajustement $\tilde{R}_f$ pour laquelle la fonction-coût $C_c$ présente un extremum, ici un minimum : $C_c((\tilde{R}_f)_{opt}) = min(C_c(\tilde{R}_f))$. Ainsi, à la valeur $(\tilde{R}_f)_{opt}$, on optimise conjointement la fonction-coût F et la fonction-coût G, c'est-à-dire que l'on minimise la surface totale $S_t$ tout en maximisant le signal électrique U généré par la cellule électrochimique.

A titre d'exemple, pour une surface $S_a$ de la zone active Za de 14 cm² et une dimension $d_f$ de 0,5 cm de la zone de fixation Zf, la valeur $(\tilde{R}_f)_{opt}$ de 0,10 donne une longueur $L_a$ de 11,7cm, conduisant à une surface totale $S_t$ de 27,9 cm² et une tension électrique de 0,6 V. Il s'agit effectivement d'une valeur optimisant à la fois la surface totale $S_t$ et la tension électrique U dans la mesure où il s'agit d'un compromis entre une forme sensiblement carrée minimisant la surface totale ($S_t$=22,5 cm²) mais ayant une tension électrique dégradée (U=0,48 V) d'une part, et une forme très allongée maximisant la tension électrique (U~0,7 V) mais ayant une surface totale élevée ($S_t$=32 cm² pour $\tilde{R}_f$ = 0,1).

Ainsi, le procédé de détermination d'un dimensionnement de la cellule électrochimique permet effectivement d'identifier une valeur optimale du rapport de forme de la zone active allongée $Z_a$ pour laquelle la cellule électrochimique présente conjointement une masse limitée et donc une meilleure densité massique d'énergie ainsi que de bonnes performances électrochimiques.

Un procédé de fabrication de la cellule électrochimique comporte ainsi une phase d'identification de la valeur $(\tilde{R}_f)_{opt}$ de la variable d'ajustement $\tilde{R}_f$ pour laquelle la surface totale $S_t$ et les performances électrochimiques sont optimisées conjointement, puis de fabriquer la cellule électrochimique en fonction de la valeur $(\tilde{R}_f)_{opt}$ identifiée. La zone active Za peut ainsi présenter la valeur $(\tilde{R}_f)_{opt}$ identifiée ou en variante présenter une valeur $\tilde{R}_f$ comprise entre une gamme allant de $(\tilde{R}_f)_{min}$ à $(\tilde{R}_f)_{max}$. Comme l'illustre la fig.4C, cette gamme peut être déterminée pour laquelle la fonction-coût composée $C_c$ ou $C_v$ présente un écart inférieur ou égal à un pourcentage prédéterminé, par exemple 20%, et de préférence 10%, de l'optimum correspondant à la valeur identifiée $(\tilde{R}_f)_{opt}$ de la variable d'ajustement $\tilde{R}_f$.

Des modes de réalisation particuliers viennent d'être décrits. Différentes variantes et modifications apparaîtront à l'homme du métier.

Ainsi, il est possible d'identifier la valeur $(\tilde{R}_f)_{opt}$ de la variable d'ajustement $\tilde{R}_f$ optimisant la fonction-coût composée $C_c$; $C_v$ pour différentes conditions opératoires de la même cellule électrochimique en fonctionnement, comme décrit précédemment, et ensuite de sélectionner une valeur parmi les différentes valeurs optimales $(\tilde{R}_f)_{opt}$ identifiées, en fonction d'une valeur cible prédéterminée de la surface totale $S_t$ et/ou d'une valeur cible prédéterminée du signal électrique généré, ici la tension U. Cela revient à effectuer certaines étapes du procédé pour différentes courbes de polarisation de la même cellule électrochimique en fonctionnement, les courbes étant représentatives de différentes conditions opératoires appliquées à la cellule électrochimique, telles que, par exemple, la température, les débits des fluides etc... Une courbe de polarisation exprime l'évolution de la tension électrique U en fonction de la densité de courant i de la cellule électrochimique. Une telle courbe est ainsi fonction des caractéristiques physico-chimiques intrinsèques à la cellule électrochimique et des conditions opératoires.

Pour cela, le procédé comporte la mise en œuvre, itérative ou simultanée, des étapes suivantes :

a. détermination de la première fonction-coût F exprimant l'évolution du premier paramètre $\tilde{S}_t$ représentatif de la surface totale $S_t$, en fonction de la variable d'ajustement $\tilde{R}_f$ ;
b. détermination, à partir du modèle physique prédéterminé de la cellule électrochimique 1 implémenté dans un calculateur, de la deuxième fonction-coût G exprimant l'évolution du deuxième paramètre $\tilde{P}_U$ représentatif du signal électrique généré, ici la tension U, en fonction de la variable d'ajustement $\tilde{R}_f$ ;

c. détermination d'une fonction-coût dite composée $C_c$; $C_v$ à partir des première et deuxième fonctions-coût F, G et identification d'une valeur $(\tilde{R}_f)_{opt}$ de la variable d'ajustement $\tilde{R}_f$ optimisant la fonction-coût composée $C_c$; $C_v$ et donc optimisant conjointement les premières et deuxièmes fonctions-coût F, G.

Lors de chaque mise en œuvre des étapes a à c, le modèle physique fournit une évolution différente du signal électrique généré, qui est fonction de conditions opératoires, celles-ci étant différentes d'une mise en œuvre des étapes à l'autre. Il peut ainsi s'agir de la variation de la température d'entrée d'un fluide caloporteur de la cellule électrochimique, des débits des fluides réactifs, ou de tout autre paramètre appliqué à la cellule électrochimique en fonctionnement. De préférence, les différentes évolutions du signal électrique généré U par la cellule électrochimique correspondent à un même signal électrique imposé à la cellule électrochimique, ici une même valeur de la densité de courant i.

Ainsi, à la suite des différentes étapes c, plusieurs valeurs optimales $(\tilde{R}_f)_{opt}$ de la variable d'ajustement $\tilde{R}_f$ étant identifiées, qui sont associées à différentes conditions opératoires de la cellule électrochimique en fonctionnement, de préférence pour une même densité de courant imposée à la cellule électrochimique. Le procédé comporte ensuite une étape d de sélection d'une valeur de la variable d'ajustement $\tilde{R}_f$, parmi lesdites valeurs optimales $(\tilde{R}_f)_{opt}$ identifiées. Cette étape de sélection prend notamment en compte une valeur cible prédéterminée de la surface totale $S_t$ et/ou une valeur cible prédéterminée du signal électrique généré par la cellule en fonctionnement. Ainsi, le procédé permet alors d'adapter la valeur de la variable d'ajustement $\tilde{R}_f$ optimisant à la fois la surface totale $S_t$ et la puissance électrique fournie par la cellule électrochimique en fonctionnement, ici pour une même valeur de la densité de courant i imposé, en adaptant les conditions opératoires appliquées à la cellule électrochimique en fonctionnement.

## Revendications

1. Procédé de détermination d'un dimensionnement d'une cellule électrochimique (1) mis en œuvre par un calculateur, permettant de minimiser une surface totale ($S_t$) de la cellule électrochimique (1) tout en maximisant un signal électrique (U) généré par la cellule électrochimique (1) en fonctionnement, la cellule électrochimique comportant :

　　◦ un assemblage membrane électrodes (10) formé de deux électrodes (12, 13) séparées l'une de l'autre par une membrane électrolytique (11), et deux plaques de maintien (20) entre lesquelles est en contact l'assemblage membrane électrodes (10) ;

　　◦ la surface totale ($S_t$) de la cellule électrochimique (1) étant définie dans un plan parallèle au plan de la membrane électrolytique (11) par :

　　　　• une zone active (Za) de forme allongée présentant un rapport de forme défini par une longueur ($L_a$) et une largeur ($l_a$), la longueur ($L_a$) étant supérieure à la largeur ($l_a$), dans laquelle chaque plaque de maintien (20) est susceptible d'être déformée suivant une direction opposée au plan de la membrane électrolytique (11), et par
　　　　• une zone de fixation (Zf) entourant la zone active (Za), dans laquelle chaque plaque de maintien (20) est fixée à l'assemblage membrane électrodes (10) ;

　　le procédé comportant les étapes suivantes :

　　　　a. détermination d'une première fonction-coût (F) exprimant l'évolution d'un premier paramètre ($\tilde{S}_t$) représentatif de la surface totale ($S_t$), en fonction d'une variable d'ajustement ($\tilde{R}_f$) représentative dudit rapport de forme de la zone active (Za) ;
　　　　b. détermination, à partir d'un modèle physique prédéterminé de la cellule électrochimique (1) implémenté dans le calculateur, d'une deuxième fonction-coût (G) exprimant l'évolution d'un deuxième paramètre ($\tilde{P}_U$) représentatif du signal électrique généré (U), en fonction de la variable d'ajustement ($\tilde{R}_f$) ;
　　　　c. détermination d'une fonction-coût dite composée ($C_c$; $C_v$) à partir des première et deuxième fonctions-coût (F, G) et identification d'une valeur (($\tilde{R}_f)_{opt}$) de la variable d'ajustement ($\tilde{R}_f$) optimisant la fonction-coût composée ($C_c$; $C_v$) et donc optimisant conjointement les premières et deuxièmes fonctions-coût (F, G).

2. Procédé selon la revendication 1, dans lequel le modèle physique prédéterminé fournit une évolution, pour des conditions opératoires données, dudit signal électrique généré (U) en fonction d'une résistance électrique ($R_{cell}$) dont la valeur dépend d'une déformation locale d'une plaque de maintien (20) dans la zone active (Za), ladite déformation locale étant elle-même fonction de la variable d'ajustement ($\tilde{R}_f$).

3. Procédé selon la revendication 2, comportant :

○ plusieurs mises en œuvre des étapes a à c, de sorte qu'à chaque mise en œuvre, le modèle physique fournit une évolution différente dudit signal électrique généré (U), lesdites évolutions dudit signal électrique généré (U) correspondant à diverses conditions opératoires de la cellule électrochimique en fonctionnement, plusieurs valeurs optimales $((\tilde{R}_f)_{opt})$ de la variable d'ajustement $(\tilde{R}_f)$ étant ainsi identifiées ;

○ une étape d de sélection de l'une desdites valeurs optimales $((\tilde{R}_f)_{opt})$ identifiées, en fonction d'une valeur cible prédéterminée de la surface totale $(S_t)$ et/ou d'une valeur cible prédéterminée du signal électrique généré (U).

**4.** Procédé selon la revendication 3, lors desdites réitérations des étapes a à c, lesdites évolutions dudit signal électrique généré (U) correspondent à une même valeur d'un signal électrique (i) imposé à la cellule électrochimique en fonctionnement.

**5.** Procédé selon l'une quelconque des revendications 1 à 4, dans lequel le premier paramètre $(\tilde{S}_t)$, le deuxième paramètre $(\tilde{P}_U)$ et la variable d'ajustement $(\tilde{R}_f)$ sont normalisés.

**6.** Procédé selon la revendication 5, dans lequel la première fonction-coût (F) tend à être optimisée lorsque la variable d'ajustement $(\tilde{R}_f)$ tend vers 1, resp 0, et la deuxième fonction-coût (G) tend à être optimisée lorsque la variable d'ajustement $(\tilde{R}_f)$ tend vers 0, resp 1.

**7.** Procédé selon l'une quelconque des revendications 1 à 6, dans lequel le premier paramètre $(\tilde{S}_t)$ est choisi pour que la première fonction-coût (F) soit décroissante, resp. croissante, et le deuxième paramètre $(\tilde{P}_U)$ est choisi pour que la deuxième fonction-coût (G) soit croissance, resp. décroissante.

**8.** Procédé selon l'une quelconque des revendications 1 à 7, dans lequel le premier paramètre $(\tilde{S}_t)$ est choisi de sorte que la minimisation, resp. maximisation, de la première fonction-coût (F) tend à minimiser la surface totale $(S_t)$, et le deuxième paramètre $(\tilde{P}_U)$ est choisi pour que la minimisation, resp. maximisation, de la deuxième fonction-coût (G) tend à maximiser le signal électrique (U).

**9.** Procédé selon l'une quelconque des revendications 1 à 8, dans lequel la fonction-coût composée $(C_v)$ est une norme $(d_{Rf})$ d'un vecteur $(OP(\tilde{R}_f))$ formé, pour chaque valeur de la variable d'ajustement $(\tilde{R}_f)$, des valeurs correspondantes du premier paramètre $(\tilde{S}_t)$ et du deuxième paramètre $(\tilde{P}_U)$, la valeur identifiée $((\tilde{R}_f)_{opt})$ de la variable d'ajustement $(\tilde{R}_f)$ correspondant à un extremum de la fonction-coût composée $(C_v)$.

**10.** Procédé selon l'une quelconque des revendications 1 à 8, dans lequel la fonction-coût composée $(C_c)$ est une combinaison éventuellement linéaire de la première fonction-coût (F) et de la deuxième fonction-coût (G), la valeur identifiée $((\tilde{R}_f)_{opt})$ de la variable d'ajustement $(\tilde{R}_f)$ correspondant à un extremum de la fonction-coût composée $(C_c)$.

**11.** Procédé de fabrication d'une cellule électrochimique (1), comportant les étapes suivantes :

- détermination d'un dimensionnement d'une cellule électrochimique (1) par le procédé selon l'une quelconque des revendications précédentes ;
- fabrication de la cellule électrochimique (1), de sorte que le rapport de forme de la zone active (Za) est fonction de la valeur identifiée $((\tilde{R}_f)_{opt})$ de la variable d'ajustement $(\tilde{R}_f)$.

**12.** Procédé de fabrication selon la revendication 11, dans laquelle le rapport de forme de la zone active (Za) est choisi dans une gamme $((\tilde{R}_f)_{min} ; (\tilde{R}_f)_{max})$ de la variable d'ajustement $(\tilde{R}_f)$ pour laquelle la fonction-coût composée $(C_c; C_v)$ présente un écart inférieur ou égal à un pourcentage prédéterminé de l'extrémum correspondant à la valeur identifiée $((\tilde{R}_f)_{opt})$ de la variable d'ajustement $(\tilde{R}_f)$.

**13.** Support d'enregistrement d'informations, comprenant des instructions pour exécuter le procédé de détermination selon l'une quelconque des revendications 1 à 10, ces instructions étant aptes à être exécutées par un calculateur.

**14.** Dispositif de détermination d'un dimensionnement d'une cellule électrochimique (1) comprenant :

- un calculateur, comprenant un processeur et une mémoire, configuré pour mettre en œuvre le procédé de détermination selon l'une quelconque des revendications 1 à 10 ;
- des moyens d'entrée de données pour fournir au calculateur une valeur de surface $(S_a)$ de la zone active (Za) et une valeur de la dimension $(d_f)$ de la zone de fixation (Zf) ;
- des moyens de sortie d'au moins une valeur identifiée de la variable d'ajustement $(\tilde{R}_f)$.

**Patentansprüche**

**1.** Verfahren zur Bestimmung einer Dimensionierung einer elektrochemischen Zelle (1), das von einem Rechner durchgeführt wird, das es gestattet, eine Gesamtfläche (St) der elektrochemischen Zelle (1) zu minimieren, wobei ein elektrisches Signal (U) maximiert wird, das von der elektrochemischen Zelle (1) im Betrieb erzeugt wird, die elektrochemische Zelle aufweisend:

  ◦ eine Membran-Elektroden-Anordnung (10), die von zwei Elektroden (12, 13), die durch eine elektrolytische Membran (11) voneinander getrennt sind, und zwei Halteplatten (20), zwischen denen die Membran-Elektroden-Anordnung (10) in Kontakt steht, gebildet ist;
  ◦ wobei die Gesamtfläche $(S_t)$ der elektrochemischen Zelle (1) in einer Ebene parallel zur Ebene der elektrolytischen Membran (11) durch Folgendes definiert ist:

    • einen aktiven Bereich (Za) länglicher Form, der ein Formverhältnis aufweist, das durch eine Länge $(L_a)$ und eine Breite $(l_a)$ definiert ist, wobei die Länge $(L_a)$ größer als die Breite $(l_a)$ ist, wobei jede Halteplatte (20) gemäß einer Richtung verformt werden kann, die der Ebene der elektrolytischen Membran (11) entgegengesetzt ist, und durch
    • einen Befestigungsbereich (Zf), der den aktiven Bereich (Za) umgibt, wobei jede Halteplatte (20) an der Membran-Elektroden-Anordnung (10) befestigt ist;

wobei das Verfahren die folgenden Schritte aufweist:

  a. Bestimmen einer ersten Kostenfunktion (F), die die Entwicklung eines ersten Parameters $(\tilde{S}_t)$, der für die Gesamtfläche $(S_t)$ repräsentativ ist, in Abhängigkeit von einer Einstellvariablen $(\tilde{R}_f)$, die für das Formverhältnis des aktiven Bereichs (Za) repräsentativ ist, ausdrückt;
  b. Bestimmen, ausgehend von einem vorbestimmten physikalischen Modell der elektrochemischen Zelle (1), das im Rechner implementiert ist, einer zweiten Kostenfunktion (G), die die Entwicklung eines zweiten Parameters $(\tilde{P}_U)$, der für das erzeugte elektrische Signal (U) repräsentativ ist, in Abhängigkeit von der Einstellvariablen $(\tilde{R}_f)$ ausdrückt;
  c. Bestimmen einer zusammengesetzten Kostenfunktion $(C_c; C_v)$ ausgehend von der ersten und zweiten Kostenfunktion (F, G) und Identifizieren eines Werts $((\tilde{R}_f)_{opt})$ der Einstellvariablen $(\tilde{R}_f)$, der die zusammengesetzte Kostenfunktion $(C_c; C_v)$ optimiert und daher die erste und zweite Kostenfunktion (F, G) zusammen optimiert.

2. Verfahren nach Anspruch 1, wobei das vorbestimmte physikalische Modell für bestimmte Betriebsbedingungen eine Entwicklung des erzeugten elektrischen Signals (U) in Abhängigkeit von einem elektrischen Widerstand $(R_{cell})$ bereitstellt, dessen Wert von einer lokalen Verformung einer Halteplatte (20) im aktiven Bereich (Za) abhängt, wobei die lokale Verformung selbst von der Einstellvariablen $(\tilde{R}_f)$ abhängig ist.

3. Verfahren nach Anspruch 2, umfassend:

  ○ mehrere Durchführungen der Schritte a bis c, so dass bei jeder Durchführung das physikalische Modell eine andere Entwicklung des erzeugten elektrischen Signals (U) bereitstellt, wobei die Entwicklungen des erzeugten elektrischen Signals (U) diversen Betriebsbedingungen der elektrochemischen Zelle im Betrieb entsprechen, wobei mehrere optimale Werte $((\tilde{R}_f)_{opt})$ der Einstellvariablen $(\tilde{R}_f)$ so identifiziert werden;
  ○ einen Schritt d des Auswählens eines der identifizierten optimalen Werte $((\tilde{R}_f)_{opt})$ in Abhängigkeit von einem vorbestimmten Zielwert der Gesamtfläche $(S_t)$ und/oder eines vorbestimmten Zielwerts des erzeugten elektrischen Signals (U).

4. Verfahren nach Anspruch 3, wobei bei den Reiterationen der Schritte a bis c die Entwicklungen des erzeugten elektrischen Signals (U) einem selben Wert eines elektrischen Signals (i) entsprechen, das im Betrieb an die elektrochemische Zelle angelegt wird.

5. Verfahren nach einem der Ansprüche 1 bis 4, wobei der erste Parameter $(\tilde{S}_t)$, der zweite Parameter $(\tilde{P}_U)$ und die Einstellvariable $(\tilde{R}_f)$ normalisiert werden.

6. Verfahren nach Anspruch 5, wobei die erste Kostenfunktion (F) dazu neigt, optimiert zu werden, wenn die Einstellvariable $(\tilde{R}_f)$ gegen 1 resp. 0 strebt, und die zweite Kostenfunktion (G) dazu neigt, optimiert zu werden, wenn die Einstellvariable $(\tilde{R}_f)$ gegen 1 resp. 0 strebt.

7. Verfahren nach einem der Ansprüche 1 bis 6, wobei der erste Parameter $(\tilde{S}_t)$ so gewählt wird, dass die erste Kostenfunktion (F) abnehmend resp. zunehmend ist, und der zweite Parameter $(\tilde{P}_U)$ so gewählt wird, dass die zweite Kostenfunktion (G) zunehmend resp. abnehmend ist.

8. Verfahren nach einem der Ansprüche 1 bis 7, wobei der erste Parameter $(\tilde{S}_t)$, so gewählt wird, dass die Minimierung resp. Maximierung der ersten Kostenfunktion (F) dazu neigt, die Gesamtfläche $(\tilde{S}_t)$ zu minimieren, und der zweite Parameter $(\tilde{P}_U)$ so gewählt wird, dass die Minimierung resp. Maximierung der zweiten Kostenfunktion (G) dazu neigt, das elektrische Signal (U) zu maximieren.

9. Verfahren nach einem der Ansprüche 1 bis 8, wobei die zusammengesetzte Kostenfunktion ($C_v$) eine Norm ($d_{Rf}$) eines Vektors ($OP(\tilde{R}_f)$) ist, der für jeden Wert der Einstellvariablen ($\tilde{R}_f$) von den entsprechenden Werten des ersten Parameters ($\tilde{S}_t$) und des zweiten Parameters ($\tilde{P}_U$) gebildet wird, wobei der identifizierte Wert (($\tilde{R}_f)_{opt}$) der Einstellvariablen ($\tilde{R}_f$) einem Extremum der zusammengesetzten Kostenfunktion ($C_v$) entspricht.

10. Verfahren nach einem der Ansprüche 1 bis 8, wobei die zusammengesetzte Kostenfunktion ($C_C$) eine eventuell lineare Kombination der ersten Kostenfunktion (F) und der zweiten Kostenfunktion (G) ist, wobei der identifizierte Wert (($\tilde{R}_f)_{opt}$) der Einstellvariablen ($\tilde{R}_f$) einem Extremum der zusammengesetzten Kostenfunktion ($C_c$) entspricht.

11. Verfahren zur Herstellung einer elektrochemischen Zelle (1) aufweisend die folgenden Schritte:

   - Bestimmen einer Dimensionierung einer elektrochemischen Zelle (1) durch das Verfahren nach einem der vorhergehenden Ansprüche;
   - Herstellen der elektrochemischen Zelle (1), so dass das Formverhältnis des aktiven Bereichs (Za) vom identifizierten Wert (($\tilde{R}_f)_{opt}$) der Einstellvariablen ($\tilde{R}_f$) abhängig ist.

12. Herstellungsverfahren nach Anspruch 11, wobei das Formverhältnis des aktiven Bereichs (Za) aus einem Bereich (($\tilde{R}_f)_{min}$ ; ($\tilde{R}_f)_{max}$) der Einstellvariablen ($\tilde{R}_f$) gewählt wird, für den die zusammengesetzte Kostenfunktion ($C_c$; $C_v$) eine Abweichung kleiner oder gleich einem vorbestimmten Prozentsatz des Extremums aufweist, das dem identifizierten Wert (($\tilde{R}_f)_{opt}$) der Einstellvariablen ($\tilde{R}_f$) entspricht.

13. Informationsspeichermedium umfassend Anweisungen zur Ausführung des Bestimmungsverfahrens nach einem der Ansprüche 1 bis 10, wobei diese Anweisungen geeignet sind, von einem Rechner ausgeführt zu werden.

14. Vorrichtung zur Bestimmung einer Dimensionierung einer elektrochemischen Zelle (1) umfassend:

   - einen Rechner, umfassend einen Prozessor und einen Speicher, der dazu ausgebildet ist, das Bestimmungsverfahren nach einem der Ansprüche 1 bis 10 durchzuführen;
   - Dateneingabemittel, um dem Rechner einen Wert einer Fläche ($S_a$) des aktiven Bereichs (Za) und einen Wert der Abmessung ($d_f$) des Befestigungsbereichs (Zf) bereitzustellen;
   - Mittel zur Ausgabe mindestens eines identifizierten Werts der Einstellvariablen ($\tilde{R}_f$).

**Claims**

1. Method for determining the dimensions of an electrochemical cell (1), which method is implemented by a computer and allows a total area ($S_t$) of the electrochemical cell (1) to be minimized while maximizing an electrical signal (U) generated by the electrochemical cell (1) in operation, the electrochemical cell comprising:

   ○ a membrane electrode assembly (10) formed from two electrodes (12, 13) separated from each other by an electrolytic membrane (11), and two holding plates (20) between which the membrane electrode assembly (10) is in contact;
   ○ the total area (St) of the electrochemical cell (1) being defined in a plane parallel to the plane of the electrolytic membrane (11) by:

      • an active zone (Za) of elongate shape having an aspect ratio defined by a length ($L_a$) and a width ($l_a$), the length ($L_a$) being larger than the width ($l_a$), in which zone each holding plate (20) is liable to be deformed in a direction opposite to the plane of the electrolytic membrane (11), and by
      • a fastening zone (Zf) encircling the active zone (Za), in which zone each holding plate (20) is fastened to the membrane electrode assembly (10);

   the method comprising the following steps:

      a. determining a first cost function (F) expressing the variation in a first parameter ($\tilde{S}_t$) representative of the total area ($S_t$) as a function of an adjustment variable ($\tilde{R}_f$) representative of said aspect ratio of the active zone (Za);
      b. determining, from a predetermined physical model of the electrochemical cell (1) implemented in the computer, a second cost function (G) expressing the variation in a second parameter ($\tilde{P}_U$) representative of the generated electrical signal (U) as a function of the adjustment variable ($\tilde{R}_f$);
      c. determining a so-called compound cost function ($C_c$; $C_v$) from the first and second cost functions (F, G) and identifying a value (($\tilde{R}_f)_{opt}$) of the adjustment variable ($\tilde{R}_f$) that optimizes the compound cost function ($C_c$; $C_v$) and that therefore conjointly optimizes the first and second cost functions (F, G).

2. Method according to Claim 1, wherein the predetermined physical model furnishes a variation, under given operating conditions, in said generated electrical signal (U) as a function of an electrical resistance ($R_{cell}$) the value of which depends on a local deformation of a holding plate (20) in the active zone (Za), said local deformation itself being dependent on the adjustment variable ($\tilde{R}_f$).

3. Method according to Claim 2, comprising:

    ◦ implementing steps a to c several times so that, in each implementation, the physical model furnishes a different variation in said generated electrical signal (U), said variations in said generated electrical signal (U) corresponding to various operating conditions of the electrochemical cell in operation, a plurality of optimal values (($\tilde{R}_f)_{opt}$) of the adjustment variable ($\tilde{R}_f$) thus being identified;
    ◦ a step d of selecting one of said identified optimal values (($\tilde{R}_f)_{opt}$) depending on a predetermined target value for the total area ($S_t$) and/or on a predetermined target value for the generated electrical signal (U).

4. Method according to Claim 3, during said reiterations of steps a to c, said variations in said generated electrical signal (U) correspond to a given value of an electrical signal (i) imposed on the electrochemical cell in operation.

5. Method according to any one of Claims 1 to 4, wherein the first parameter ($\tilde{S}_t$), the second parameter ($\tilde{P}_U$) and the adjustment variable ($\tilde{R}_f$) are normalized.

6. Method according to Claim 5, wherein the first cost function (F) tends to be optimized when the adjustment variable ($\tilde{R}_f$) tends to 1 or 0, respectively, and the second cost function (G) tends to be optimized when the adjustment variable ($\tilde{R}_f$) tends to 0 or 1, respectively.

7. Method according to any one of Claims 1 to 6, wherein the first parameter ($\tilde{S}_t$) is chosen so that the first cost function (F) is a decreasing or increasing function, respectively, and the second parameter ($\tilde{P}_U$) is chosen so that the second cost function (G) is an increasing or decreasing function, respectively.

8. Method according to any one of Claims 1 to 7, wherein the first parameter ($\tilde{S}_t$) is chosen so that the minimization or maximization, respectively, of the first cost function (F) tends to minimize the total area ($S_t$), and the second parameter ($\tilde{P}_U$) is chosen so that the minimization or maximization, respectively, of the second cost function (G) tends to maximize the electrical signal (U).

9. Method according to any one of Claims 1 to 8, wherein the compound cost function ($C_v$) is a norm ($d_{Rf}$) of a vector ($OP(\tilde{R}_f)$) formed, for each value of the adjustment variable ($\tilde{R}_f$), from the corresponding values of the first parameter ($\tilde{S}_t$) and of the second parameter ($\tilde{P}_U$), the identified value (($\tilde{R}_f)_{opt}$) of the adjustment variable ($\tilde{R}_f$) corresponding to an extremum of the compound cost function ($C_v$).

10. Method according to any one of Claims 1 to 8, wherein the compound cost function ($C_c$) is a possibly linear combination of the first cost function (F) and the second cost function (G), the identified value (($\tilde{R}_f)_{opt}$) of the adjustment variable ($\tilde{R}_f$) corresponding to an extremum of the compound cost function ($C_c$).

11. Process for manufacturing an electrochemical cell (1), comprising the following steps:

    - determining the dimensions of an electrochemical cell (1) using the method according to any one of the preceding claims;
    - manufacturing the electrochemical cell (1) so that the aspect ratio of the active zone (Za) is a function of the identified value (($\tilde{R}_f)_{opt}$) of the adjustment variable ($\tilde{R}_f$).

12. Manufacturing process according to Claim 11, wherein the aspect ratio of the active zone (Za) is chosen in a range (($\tilde{R}_f)_{min}$; ($\tilde{R}_f)_{max}$) of the adjustment variable ($\tilde{R}_f$) for which the compound cost function ($C_c$; $C_v$) has a deviation smaller than or equal to a predetermined percentage from the extremum corresponding to the identified value (($\tilde{R}_f)_{opt}$) of the adjustment variable ($\tilde{R}_f$).

13. Data storage medium comprising instructions for executing the determining method according to any one of Claims 1 to 10, these instructions being able to be executed by a computer.

14. Device for determining the dimensions of an electrochemical cell (1) comprising:

    - a computer, comprising a processor and a memory, configured to implement the determining method according to any one of Claims 1 to 10;
    - means for inputting data in order to furnish the computer with a value for the area ($S_a$) of the active zone (Za) and a value for the dimension ($d_f$) of the fastening zone (Zf);
    - means for outputting at least one identified value of the adjustment variable ($\tilde{R}_f$).

**Fig.1A**

**Fig.1B**

**Fig.2A**

**Fig.2B**

**Fig.2C**

**Fig.3A**

**Fig.3B**

**Fig.3C**

**Fig.3D**

**Fig.3E**

**Fig.4A**

**Fig.4B**

**Fig.4C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040224190 A

**Littérature non-brevet citée dans la description**

- **ROBIN.** Development and experimental validation of a PEM fuel cell 2D-model to study heterogeneities effects along large-area cell surface. *Int. J. Hydrogen Energy,* 2015, vol. 40, 10211-10230